# EUROPÄISCHE PATENTANMELDUNG

(11) **EP 1 852 927 A1**
(43) Veröffentlichungstag der Anmeldung: **07.11.2007**
(21) Anmeldenummer: 07007147.7
(22) Anmeldetag: 05.04.2007
(51) Int. Cl.: H01M 4/50, H01M 4/04, H01M 4/02, H01M 4/62, H01M 2/02, H01M 6/16

(54) **Elektrode für eine Lithiumbatterie und Verfahren zur Herstellung derselben**

(30) Priorität: 06.05.2006 DE 102006021158
(71) Anmelder: BIOTRONIK CRM Patent AG, 6341 Baar (CH)
(72) Erfinder: Drews, Jürgen, 01796 Pirna (DE); Fehrmann, Gerd, 01796 Pirna (DE); Fischer, Thomas, 01796 Pirna (DE); Hucke, Thomas, 01217 Dresden (DE); Staub, Roland, 01819 Berggießhübel (DE); Traulsen, Tim, 01796 Pirna (DE)
(74) Vertreter: Lindner-Vogt, Karin L.

(57) **Zusammenfassung**

Die Erfindung betrifft u. a. eine Elektrode für eine Lithiumbatterie mit einem Elektrodenelement aus einem Material bestehend aus oder enthaltend:
2 - 10 Gewichtsteile
eines kohlenstoffhaltigen Leitfähigkeitsadditivs auf Basis eines anisotropen expandierten Graphits;
0 - 5 Gewichtsteile
eines plättchenförmigen, kugelförmigen oder kartoffelförmigen Graphits;
1 - 8 Gewichtsteile
eines Bindemittels; und
77 - 97 Gewichtsteile
eines Aktivmaterials ausgewählt aus der Gruppe Metall, Übergangsmetalloxid und Übergangsmetallphosphat, wobei das Aktivmaterial in der Lage ist, Lithium-Ionen im Kristallgitter zu interkalieren.

## Beschreibung

Diese Erfindung betrifft eine Elektrode für eine Lithiumbatterie, ein Verfahren zur Herstellung derselben, eine Lithiumbatterie, die die erfindungsgemäße Elektrode enthält, die Verwendung der Elektrode in implantierbaren medizinischen Geräten sowie eine Pulvermischung, die Einsatz im Herstellungsverfahren der Elektrode findet.

In den vergangenen Jahren sind die Funktionalitäten elektrisch betriebener medizinischer Implantate ständig gestiegen. Durch neue Elektronikkomponenten konnten neue therapeutische Möglichkeiten integriert werden und sogar die Funk-Kommunikation von Implantaten mit externen Geräten realisiert werden (Telemetriefunktion).

Durch die zusätzlichen Funktionalitäten sind jedoch auch die Anforderungen an die elektrischen Eigenschaften der Batterien gestiegen:
- Für die Miniaturisierung des Implantats ist die Verwendung von Batterien hoher Energiedichte erforderlich, um eine ausreichende Laufzeit des Geräts zu gewährleisten.
- Für Telemetriefunktionen von Implantaten ist es zusätzlich erforderlich, dass die Batterien beim Sendevorgang Strompulse ausreichender Stärke und hoher Frequenz abgeben können.
- Zur Miniaturisierung der Batterie und zur Minimierung des Batteriegewichts ist die Verwendung möglichst dünnwandiger Batteriegehäuse erforderlich.

Weiterhin sollte die Batterie während der Entladung so wenig wie möglich schwellen. Eine Schwellung der Batterie in einem hermetisch verschlossenen Implantat kann zu einer Beschädigung von Komponenten z.B. der enthaltenen Elektronik führen. Drückt eine schwellende Batterie von innen auf das Gehäuse des Implantats kann es zu einer unerwünschten Aufweitung des Implantats kommen. Im ungünstigsten Fall kann dies zu Spannungsrissen des Batterie- oder des Implantatgehäuses führen.

Die fortschreitende Miniaturisierung der Implantate erfordert den Einsatz flacher, prismatischer Batterien mit einer nach physiologischen Gesichtpunkten optimierten Kontur. Gerade prismatische Batterien schwellen jedoch besonders stark, da ein von innen wirkender Druck hauptsächlich die großflächigen Stirnseiten des Gehäuses verformt.

Die Schwellung von Batterien ist gemäß dem Stand der Technik ein bekanntes Phänomen. Eine typische Ursache für Batterieschwellung ist eine im Vergleich zu den Edukten geringere Dichte der bei der Entladung entstehenden Reaktionsprodukte. Dies verursacht einen Volumenzuwachs bei der Entladung, wie dies z.B. bei Lithium/Iod-Batterien der Fall ist. Häufig führt auch die Bildung gasförmiger Reaktionsprodukte zu einer Schwellung der Batterie. Die Bildung gasförmiger Produkte in Lithium-Batterien ist auch abhängig von dem Feuchtigkeitsgehalt der in der Batterie verwendeten Komponenten. Wasser reagiert z.B. mit dem Lithium der Anode unter Bildung von gasförmigem Wasserstoff. In der Regel ist die Schwellung einer Batterie auch mit einem Impedanzanstieg verbunden. Dieser Effekt kann durch gasförmige Substanzen verursacht werden, die durch Adsorption die aktive Oberfläche der Elektroden verringern. Die Schwellung kann auch zu einer Vergrößerung der Abstände zwischen Anode und Kathode und damit zu einem Impedanzanstieg der Batterie führen. Durch Schwellung kann auch die Struktur poröser Elektroden negativ beeinflusst werden, wenn durch eine Aufweitung der Elektrodenstruktur die elektrische Kontaktierung der Aktivmaterialien durch die in den Elektroden vorhandenen Leitfähigkeitsadditive verschlechtert wird.

Die Unterbindung der Bildung gasförmiger Produkte innerhalb der Batterie durch die Verwendung getrockneter Materialien und die Produktion der Batterien unter trockener Atmosphäre entspricht dem Stand der Technik und ist auch für die Herstellung implantierbarer Batterien eine gut geeignete Methode. Allerdings bewirken diese Maßnahmen allein nur eine Verringerung der Schwellung.

In US 5,308,714 wird zur Abhilfe der Zusatz von V₆O₁₃ zum Kathodenmaterial von Lithium/Mangandioxid-Batterien vorgeschlagen, wobei der Zusatz die Bildung gasförmiger Reaktionsprodukte zurückzudrängen vermag. In JP 57003368 wird der Zusatz von Lanthanoxid (La₂O₃) oder Yttriumoxid (Y₂O₃) zum Kathodenmaterial beschrieben, um die Schwellung der Batterie zu verringern. Diese Additive müssen einem zuvor wärmebehandelten Kathodenmaterial zugesetzt werden. Anschließend ist eine weitere Wärmebehandlung bei 100 - 450 °C erforderlich. Die Verwendung von Metalloxiden wie V₆O₁₃, La₂O₃ oder Y₂O₃ als Additive in dem Aktivmaterial der Kathode ist immer mit einer Verringerung der Energiedichte der Batterie verbunden, da diese nicht linear an der elektrochemischen Entladereaktion teilnehmen. Weiterhin schränken die hohen Kosten dieser Verbindungen und deren Toxizität die Anwendung - vor allem im medizinischen Bereich - weiter ein.

Es ist weiterhin bekannt, dass in Lithium-Batterien, in denen Kupfersilbervanadiumoxid, Kupfervanadiumoxid oder Silbervanadiumoxid als Kathodenmaterial verwendet wird, die Schwellung zunimmt, wenn der Kathode besonders feinteiliger Kohlenstoff (Ruß) zur Verbesserung der elektrischen Leitfähigkeit zugesetzt wird. Wenn der Anteil der Leitfähigkeitsadditive auf einen Wert von 2% Graphit und 1% Ruß gesenkt wird, kann die Schwellung verringert werden (US 5,569,558). Das beschriebene Verfahren ist jedoch nur begrenzt anwendbar, da ein Anteil an Leitfähigkeitszusätzen von insgesamt 3% eine nur geringfügige Verbesserung der elektrischen Leitfähigkeit der Elektrode bewirkt. Hierdurch wird die Belastbarkeit der Kathoden pro Flächeneinheit stark einschränkt.

EP 0 978 889 beschreibt ein Verfahren zur Minimierung der Schwellung durch die Verwendung eines kohlenstoffhaltigen Leitfähigkeitsadditivs mit einer spezifischen Oberfläche < 100 m²/g, welches einer Kathode zusätzlich zu feinteiligem Graphit zugesetzt wird. Die Verwendung von Mischungen von Leitfähigkeitsadditiven stellt jedoch einen zusätzlichen Aufwand bei der Herstellung der Elektroden dar, da die verschiedenen Komponenten homogen miteinander vermischt und getrocknet werden müssen. Dieser Vorgang wird technisch umso aufwendiger, je stärker sich die Partikelgrößen der Materialien voneinander unterscheiden und je größer die Differenzen der Dichten der Materialien sind.

Es wurden auch mehrfach Elektrolytzusätze beschrieben, die die Schwellung von Batterien verringern helfen sollen. So beschreibt z. B. KR 1020040085960, dass die Zugabe halogenierter aromatischer Komponenten in einer Menge von 0,01 bis 10% zum Elektrolyten eine Schwellung bei einer wiederaufladbaren (Sekundär-)Batterie vermindern soll. Elektrolytadditive zur Verringerung der Schwellung können auch in implantierbaren Batterien verwendet werden, allerdings ist deren Herstellung und Reinigung mit zusätzlichem Aufwand verbunden.

In JP 11265722 wird ein Verfahren beschrieben, bei welchem das Anodenmaterial der Batterie in einem speziellen Volumenverhältnis zum Kathodenmaterial in der Batterie eingesetzt wird. Hierdurch soll die Schwellung der Batterie unter einen Wert von 10% bezogen auf die Gesamtdicke der Batterie reduziert werden, indem dass bei der Entladung der Anode freiwerdende Volumen einen Teil der Batterieschwellung kompensiert. Die Abstimmung der Volumina von Anode und Kathode kann nur in solchen Batterien eine technische Lösung darstellen, in denen die Volumenabnahme der Anode bei der Entladung der Batterie dem Volumenzuwachs der Kathode bzw. dem bei der Entladung gebildeten Gasvolumen annähernd entspricht. In high-energy Batterien für implantierbare Geräte ist das Volumen der Kathode im Vergleich zur Anode jedoch so groß, dass die Volumenabnahme der Anode die Schwellung einer normalen Batteriekathode unmöglich kompensieren kann.

Auch konstruktive Maßnahmen an Batteriegehäusen zur Verringerung der Schwellung von Batterien wurden beschrieben. So wird z. B. in KR 1020050020210 eine prismatische Gehäusekonstruktion aus einem gehärteten Batteriegehäuse beschrieben, welches mit einem Deckel aus einem besonders weichen Material verschlossen wird. Hierdurch soll die Schwellung der großflächigen Stirnseiten der prismatischen Batterie verringert werden, indem sich der Deckel der Batterie bevorzugt auswölbt. Auch das Patent US 6,248,472 beschreibt die Verwendung eines stabilisierten Batteriegehäuses zur Reduzierung der Schwellung. Konstruktive Verstärkungen des Batteriegehäuses sind jedoch für implantierbare Batterien ungeeignet, da Sie das Gewicht der Batterie vergrößern und bei gleichem Volumen der Batterie zu einer Senkung der Energiedichte führen. Im Sinne einer Miniaturisierung der Batterie ist im Gegenteil eine Verringerung der Materialstärke des Gehäuses erforderlich. In hermetisch geschlossenen Implantaten ist zudem die Lenkung der Schwellung in eine Raumrichtung keine anwendbare technische Lösung, da innerhalb des Gehäuses in keiner Richtung ausreichender Freiraum besteht.

Gemäß EP 1 156 541 soll die Verwendung faserförmiger Kathodenmaterialien in Batterien die Schwellung von Batterien verhindern helfen. Der Effekt wird jedoch ausschließlich im Zusammenhang mit dem Kathodenmaterial Kohlenstoffmonofluorid beschrieben.

Aufgabe der vorliegenden Erfindung ist es, einen verbesserten oder zumindest alternativen Ansatz zur Lösung der mit der Batterieschwellung zusammenhängenden technischen Probleme bereitzustellen. Dabei sollen insbesondere die geschilderten Nachteile der Lösungsansätze des Standes der Technik überwunden werden.

Nach einem ersten Aspekt der Erfindung wird diese Aufgabe durch die Bereitstellung einer neuen Elektrode für eine Lithiumbatterie gelöst. Die erfindungsgemäße Elektrode zeichnet sich durch ein Elektrodenelement aus, das aus einem Material der nachfolgenden Zusammensetzung besteht oder dieses enthält:

| | |
|---|---|
| 2 - 10 Gewichtsteile | eines kohlenstoffhaltigen Leitfähigkeitsadditivs auf Basis eines anisotropen expandierten Graphits; |
| 0 - 5 Gewichtsteile | eines plättchenförmigen, kugelförmigen oder kartoffelförmigen Graphits; |
| 1 - 8 Gewichtsteile | eines Bindemittels; und |
| 77 - 97 Gewichtsteile | eines Aktivmaterials ausgewählt aus der Gruppe Metall, Übergangsmetalloxid oder Übergangsmetallphosphat, wobei das Aktivmaterial in der Lage ist, Lithium-Ionen im Kristallgitter zu interkalieren. |

Das Elektrodenelement ist - neben weiteren Bauelementen, wie beispielsweise einem elektrischen Ableiter - Bestandteil der Elektrode, und stellt insbesondere eine für die elektrochemischen Vorgänge bei der Entladung notwendige aktive Oberfläche zur Verfügung, die mit einem Elektrolyten der Batterie in Kontakt steht. Es hat sich gezeigt, dass eine im Sinne der Erfindung modifizierte Elektrode ein Anschwellen der Batterie während der Entladung verhindert oder zumindest stark mindern kann.

Ein geeignetes metallisches Aktivmaterial ist beispielsweise Silizium. Als Aktivmaterial aus der Gruppe der Übergangsmetalloxide eignet sich bevorzugt Mangandioxid und/oder Silber-Vanadiumoxid. Ebenfalls gut geeignet als Aktivmaterial aus der Gruppe der Übergangsmetallphosphate sind beispielsweise Kupfer-oxyphosphat und/oder Vanadium-oxyphosphat. Nach einer ersten bevorzugten Ausführungsform ist das Aktivmaterial Mangandioxid. Das Aktivmaterial besteht weiterhin vorzugsweise aus Partikeln mit einer Größe <100 µm, insbesondere Partikeln mit einer Größe im Bereich von 10 µm bis 80 µm. Der Kohlenstoffgehalt liegt bei einem handelsüblichen Produkt bei >99,5%. Als besonders geeignet hat sich der "TIMREX^{®} BNB 90" von der Firma "TIMCAL Graphite and Carbon" erwiesen.

Ferner ist bevorzugt, wenn das Leitfähigkeitsadditiv aus Partikeln der Größe D90 = 80 bis 90 µm und D50 = 30 bis 40 µm besteht. Das plättchenförmige, kugelförmige oder kartoffelförmige Graphit besteht vorzugsweise aus Partikeln mit einer Größe im Bereich von 3 bis 30 µm. Als plättchenförmiger Graphit eignet sich beispielsweise "TIMREX^{®} SGF 15" von dem Hersteller "TIMCAL Graphite and Carbon", als kugelförmiger Graphit "MCMB - meso carbon micro beads" von dem Hersteller "OSAKA Gas" und als kartoffelförmiger Graphit "TIMREX^{®} SLP50" von der Herstellerfirma "TIMCAL Graphite and Carbon".

Das Bindemittel ist vorzugsweise ein Polymer, insbesondere ein fluorhaltiges Polymer, wie Polytetrafluorethylen (PTFE) oder Polyvinylidenfluorid (PvdF).

Vorzugsweise weist das Material eine BET-Oberfläche von > 20 m²/g auf. Eine Restfeuchtigkeit der Elektrode liegt vorzugsweise bei < 300 ppm.

Schließlich weist die Elektrode vorzugsweise eine Dicke im Bereich von 300 µm bis 6 mm, insbesondere im Bereich von 1 mm bis 6 mm auf.

Ein zweiter Aspekt der Erfindung richtet sich auf ein Verfahren zur Herstellung einer Elektrode für eine Lithiumbatterie. Das erfindungsgemäße Verfahren umfasst die Schritte:
(i) Bereitstellen einer Pulvermischung enthaltend oder bestehend aus:

| | |
|---|---|
| 2 - 10 Gewichtsteile | eines kohlenstoffhaltigen Leitfähigkeitsadditivs auf Basis eines anisotropen expandierten Graphits; |
| 0 - 5 Gewichtsteile | eines plättchenförmigen, kugelförmigen oder kartoffelförmigen Graphits; |
| 1 - 8 Gewichtsteile | eines Bindemittels; und |
| 77 - 97 Gewichtsteile | eines Aktivmaterials ausgewählt aus der Gruppe Metall, Übergangsmetalloxid und Übergangsmetallphosphat, wobei das Aktivmaterial in der Lage ist, Lithium-Ionen im Kristallgitter zu interkalieren; und |

(ii) Verfestigen der Pulvermischung zu einem Elektrodenelement für die Elektrode.
Die Pulvermischung wird insbesondere mit Hilfe eines Pressverfahrens zu Kathoden verpresst, wobei beim Pressvorgang ein elektrisch leitfähiger Ableiter, z.B. ein metallisches Gitter oder eine metallische Folie, eingearbeitet wird. Alternativ kann die Pulvermischung bei Verwendung eines dispergierten Bindemittels auch zu einer Dispersion weiterverarbeitet werden und mittels eines Nassbeschichtungsverfahrens auf einen elektrisch leitfähigen Ableiter aufgetragen und anschließend getrocknet werden.
Vorzugsweise umfasst das Verfahren ferner den sich Schritt (ii) anschließenden Schritt:
(iii) Trocknen des Elektrodenelementes bis ein Restwassergehalt < 300 ppm beträgt.
Vorzugsweise herrscht im Schritt (iii) ein Druck im Bereich von 10⁻² bis 10⁻³ mbar und eine Temperatur im Bereich von 20° bis 350 °C. Durch die Kombination von Materialauswahl zur Herstellung der Elektroden und des Trockenverfahren kann ein vollständiges Ausbleiben der Batterieschwellung während der Entladung erreicht werden.

Nach einem dritten Aspekt der Erfindung wird eine Lithiumbatterie bereitgestellt, die die erfindungsgemäße Elektrode der obig beschriebenen Ausführung als Kathode enthält. Vorzugsweise ist die Lithiumbatterie für Grundlast-Entladeströme < 100 µA und Puls-Entladeströme im Bereich von 1 - 100 mA ausgelegt. Weiterhin ist bevorzugt, wenn eine Anode metallisches Lithium enthält oder aus metallischem Lithium besteht.

Bevorzugt ist ferner, wenn die Lithiumbatterie ein nicht-wässriges organisches Lösungsmittel als Elektrolyten enthält, das in der Lage ist ein lithiumhaltiges Leitsalz zu lösen. Das Lösungsmittel ist vorzugsweise ausgewählt aus ein oder mehreren Lösungsmitteln der Gruppe
(i) organische Carbonate, insbesondere Ethylencarbonat, Propylencarbonat, Dimethylcarbonat, Diethylcarbonat oder Ethylmethylcarbonat; und
(ii) Ether, insbesondere Diethoxyethan oder Dimethoxyethan.

Das Leitsalz ist vorzugsweise ausgewählt aus der Gruppe Lithiumperchlorat, Lithiumtetrafluoroborat, Lithiumhexafluoroarsenat und Lithium-bis-oxalatoborat. Vorzugsweise liegt das Leitsalz mit einer Konzentration von etwa 1 mol/l im Elektrolyten vor.

Ein vierter Aspekt der Erfindung richtet sich auf die Verwendung der erfindungsgemäßen Lithiumbatterie in medizinischen Implantaten, insbesondere in Herzschrittmachern oder Defibrillatoren.

Batterien für implantierbare Geräte werden in drei Kategorien eingeteilt:

| Kategorie | Typische Entladeströme (Grundlast) | Typische Entladeströme (Puls) |
|---|---|---|
| low-rate | < 100 µA | - |
| medium-rate | < 100 µA | 1-100 mA |
| high-rate | < 100 µA | > 1000 mA |

Die erfindungsgemäße Lithiumbatterie eignet sich insbesondere zur Herstellung von gasdichten, prismatischen medium-rate-Batterien für implantierbare medizinische Geräte.

Die Form der Elektrode kann den Anforderungen des zu implantierenden Geräts weitgehend angepasst werden. Eine Dicke der Elektrode liegt vorzugsweise zwischen 300 µm und 6 mm liegen, besonders bevorzugt sind Elektrodendicken zwischen 1 und 4 mm.

Durch das Ausbleiben oder die weitgehende Minderung der Batterieschwellung während der Entladung kann das medizinische Implantat besonders stark miniaturisiert werden, da innerhalb des Implantatgehäuses kein Freiraum für den Volumenzuwachs einer schwellenden Batterie berücksichtigt werden muss. Durch das Ausbleiben der Schwellung können keine Bauteile innerhalb des Implantats mechanisch beschädigt werden. Da innerhalb der Batterie kein Volumenzuwachs entsteht, tritt keine mechanische Belastung des Batteriegehäuses auf. Die Integrität des Batteriegehäuses und der Schweißnähte wird nicht beeinträchtigt. Die Betriebssicherheit des Implantats steigt.

Durch das Ausbleiben der Schwellung können besonders dünnwandige Gehäuse verwendet werden, was zu einer zusätzlichen Erhöhung der Energiedichte führt. Die erfindungsgemäße Lösung erlaubt ferner die Konstruktion prismatischer Gehäuse mit besonders großen Stirnflächen. Das Ausbleiben einer Batterieschwellung erlaubt neue Konstruktionsprinzipien für implantierbare Geräte. So können z.B. Elektronikkomponenten des Implantats direkt auf dem Batteriegehäuse platziert werden, da diese nicht durch eine Schwellung der Batterie beschädigt werden können.

Ein fünfter Aspekt der Erfindung richtet sich auf die als Ausgangsprodukt des Herstellungsverfahrens der Lithiumbatterie eingesetzte Pulvermischung. Die Pulvermischung besteht aus oder enthält:

| | |
|---|---|
| 2 - 10 Gewichtsteile | eines kohlenstoffhaltigen Leitfähigkeitsadditivs auf Basis eines anisotropen expandierten Graphits; |
| 0 - 5 Gewichtsteile | eines plättchenförmigen, kugelförmigen oder kartoffelförmigen Graphits; |
| 1 - 8 Gewichtsteile | eines Bindemittels; und |
| 77 - 97 Gewichtsteile | eines Aktivmaterials ausgewählt aus der Gruppe Metall, Übergangsmetalloxid und Übergangsmetall- |
| | phosphat, wobei das Aktivmaterial in der Lage ist, Li-thium-Ionen im Kristallgitter zu interkalieren. |

Nachfolgend wird die Erfindung anhand eines Ausführungsbeispiels und der dazugehörigen Zeichnungen näher erläutert. Es zeigen:
- Fig. 1: Eine schematische Schnittansicht zur Illustration des prinzipiellen Aufbaus der erfindungsgemäße Lithiumbatterie;
- Fig. 2a/2b: Eine Batterie mit Gehäuse in schematischer Schnittdarstellung und Draufsicht;
- Fig. 3: Eine graphische Darstellung der Batteriedicke in Abhängigkeit von der Entladetiefe.

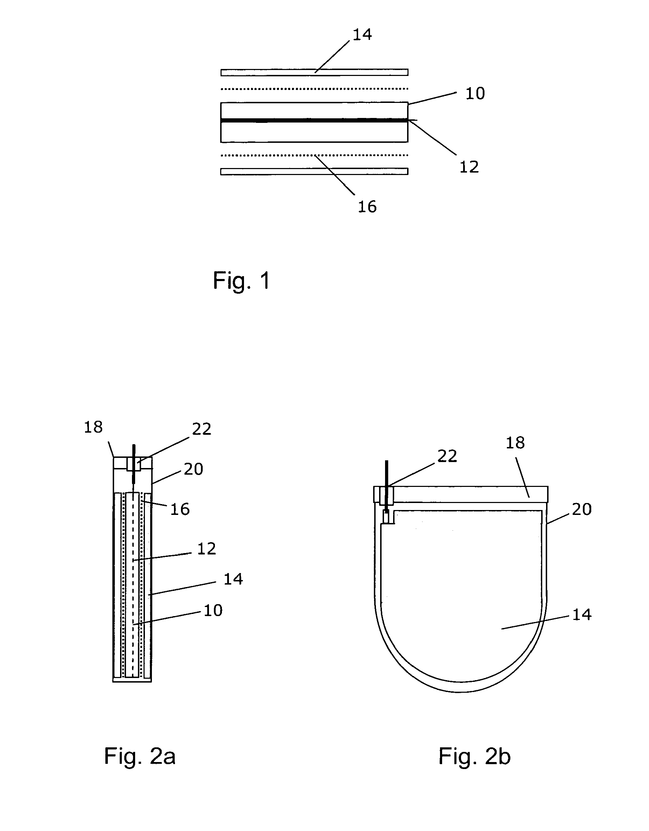

Fig. 1 dient der Illustration des grundsätzlichen Aufbaus einer im Sinne der Erfindung modifizierten Lithiumbatterie. Eine Kathode 10 weist einen elektrisch leitfähigen Ableiter 12 aus einem elektrisch gut leitfähigen Material auf. Der Ableiter 12 kann in Form eines Ableitgitters bereitgestellt werden. Die Kathode 10 ist beidseitig mit Lithium-Anoden 14 versehen, wobei zwischen der Kathode 10 und den Lithium-Anoden 14 jeweils ein Separator 16 angeordnet ist.

Zur Herstellung einer Kathode 10 für einen Schrittmacher oder Defibrillator werden 91 Gew.% Mangandioxid mit 7 Gew.% eines expandierten Graphits und 2 Gew.% eines PTFE-Pulvers in einem Pulvermischer homogen vermengt. Eine Pressform, die einen der Elektrodenform komplementären Hohlraum aufweist in dem etwa mittig der Ableiter 12 angeordnet ist, wird mit der Pulvermischung beschickt und die Pulvermischung wird mit dem Ableiter 12 verpresst. Für den Einsatz in Schrittmachern oder Defibrillatoren sollte die Kathode 10 etwa 3,5 mm dick sein. Eine Gesamtoberfläche der Kathode 10 sollte etwa 10 cm² betragen. Nach dem Pressen wird die Kathode 10 bei einer Temperatur von 270 °C - 300 °C und einem Druck von 10⁻³ mbar für mindestens 1 h getrocknet. Anschließend wird die Kathode 10 beidseitig mit formgleichen Lithium-Anode 14 versehen. Als Separator 16 dient eine mikroporöse Membran aus einem Polyolefin oder einem keramischen Material.

Die Figuren 2a und 2b zeigen den Aufbau der Batterie in einer schematischen Schnittdarstellung und Draufsicht. Die zuvor beschriebenen Batteriekomponenten Kathode 10, Lithium-Anoden 14 und Separator 16 werden in ein Batteriegehäuse 20 aus Edelstahl mit einer Wandstärke von 0,3 mm eingeschweißt, wobei die Anoden 14 mit dem Batteriegehäuse 20 elektrisch leitend verbunden war. Die Kathode 10 wurde mit Hilfe einer gasdichten, elektrisch isolierenden Glas-Metall-Durchführung 22 durch einen Deckel 18 des Batteriegehäuses 20 geführt. Anschließend wird die Batterie mit einem Elektrolyten aus Ethylencarbonat/Propylencarbonat/Diethyoxyethan (Mischungsverhältnis 1:1:1) und 1 M an Lithiumperchlorat, befüllt und gasdicht verschlossen.

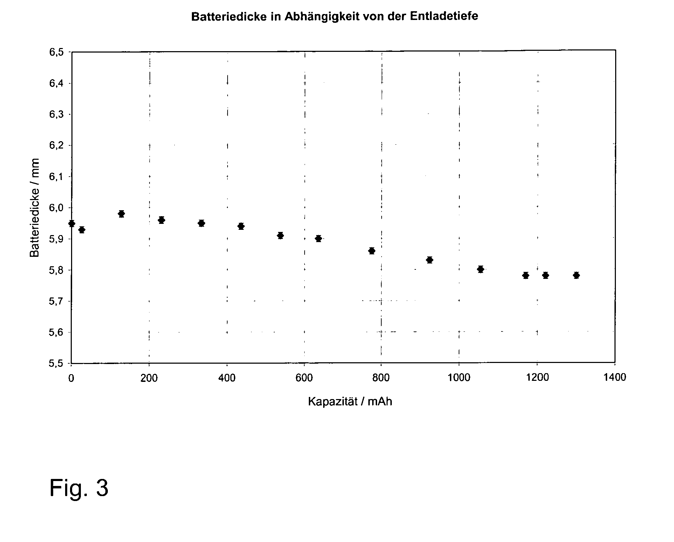

Fig. 3 zeigt den Verlauf der Batteriedicke in Abhängigkeit von der Entladetiefe. Die Nenndicke der Batterie betrug 6 mm. Die Abbildung zeigt, dass keine Schwellung während der Entladung auftritt. Es wird sogar deutlich, dass die Dicke der Batterie leicht abnimmt. Die Genauigkeit der Messung ist mit 0,005 mm angegeben.

## Patentansprüche

1. Elektrode für eine Lithiumbatterie mit einem Elektrodenelement aus einem Material bestehend aus oder enthaltend:
| | |
|---|---|
| 2 - 10 Gewichtsteile | eines kohlenstoffhaltigen Leitfähigkeitsadditivs auf Basis eines anisotropen expandierten Graphits; |
| 0 - 5 Gewichtsteile | eines plättchenförmigen, kugelförmigen oder kartoffelförmigen Graphits; |
| 1 - 8 Gewichtsteile | eines Bindemittels; und |
| 77 - 97 Gewichtsteile | eines Aktivmaterials ausgewählt aus der Gruppe Metall, Übergangsmetalloxid und Übergangsmetallphosphat, wobei das Aktivmaterial in der Lage ist, Lithium-Ionen im Kristallgitter zu interkalieren. |

2. Elektrode nach Anspruch 1, bei der das Aktivmaterial Mangandioxid ist.

3. Elektrode nach Anspruch 1, bei der das Aktivmaterial aus Partikeln mit einer Größe < 100 µm besteht.

4. Elektrode nach Anspruch 1, bei der das Aktivmaterial aus Partikeln mit einer Größe im Bereich von 10 µm bis 80 µm besteht.

5. Elektrode nach Anspruch 1, bei der das Leitfähigkeitsadditiv aus Partikeln der Größe D90 = 80 bis 90 µm und D50 = 30 bis 40 µm besteht.

6. Elektrode nach Anspruch 1, bei der das plättchenförmige, kugelförmige oder kartoffelförmige Graphit aus Partikeln mit einer Größe im Bereich von 3 bis 30 µm besteht.

7. Elektrode nach Anspruch 1, bei der das Bindemittel ein Polymer ist.

8. Elektrode nach Anspruch 7, bei der das Polymer fluorhaltig ist.

9. Elektrode nach Anspruch 8, bei der das Polymer Polytetrafluorethylen (PTFE) oder Polyvinylidenfluorid (PvdF) ist.

10. Elektrode nach Anspruch 1, bei der das Material eine BET-Oberfläche von > 20 m²/g aufweist.

11. Elektrode nach Anspruch 1, bei der eine Restfeuchtigkeit der Elektrode bei < 300 ppm liegt.

12. Elektrode nach Anspruch 1, bei der die Elektrode eine Dicke im Bereich von 300 µm bis 6 mm aufweist.

13. Elektrode nach Anspruch 12, bei der die Dicke der Elektrode im Bereich von 1 mm bis 6 mm liegt.

14. Verfahren zur Herstellung einer Elektrode für eine Lithiumbatterie, umfassend die Schritte:
(i) Bereitstellen einer Pulvermischung enthaltend oder bestehend aus:
| | |
|---|---|
| 2 - 10 Gewichtsteile | eines kohlenstoffhaltigen Leitfähigkeitsadditivs auf Basis eines anisotropen expandierten Graphits; |
| 0 - 5 Gewichtsteile | eines plättchenförmigen, kugelförmigen oder kartoffelförmigen Graphits; |
| 1 - 8 Gewichtsteile | eines Bindemittels; und |
| 77 - 97 Gewichtsteile | eines Aktivmaterials ausgewählt aus der Gruppe Metall, Übergangsmetalloxid und Übergangsmetallphosphat, wobei das Aktivmaterial in der Lage ist, Lithium-Ionen im Kristallgitter zu interkalieren; und |
(ii) Verfestigen der Pulvermischung zu einem Elektrodenelement für die Elektrode.

15. Verfahren nach Anspruch 14, ferner umfassend den Schritt:
(iii) Trocknen des Elektrodenelementes bis ein Restwassergehalt < 300 ppm beträgt.

16. Verfahren nach Anspruch 15, bei dem im Schritt (iii) ein Druck im Bereich von 10⁻² bis 10⁻³ mbar und eine Temperatur im Bereich von 20° bis 350 °C herrscht.

17. Lithiumbatterie, enthaltend eine Elektrode nach einem der Ansprüche 1 bis 13 als Kathode.

18. Lithiumbatterie nach Anspruch 17, bei der die Lithiumbatterie für Grundlast-Entladeströme < 100 µA und Puls-Entladeströme im Bereich von 1 - 100 mA ausgelegt ist.

19. Lithiumbatterie nach Anspruch 17, bei der eine Anode metallisches Lithium enthält oder aus metallischem Lithium besteht.

20. Lithiumbatterie nach Anspruch 17, bei der die Lithiumbatterie ein nicht-wässriges organisches Lösungsmittel als Elektrolyten enthält, das in der Lage ist ein lithiumhaltiges Leitsalz zu lösen.

21. Lithiumbatterie nach Anspruch 20, bei das Lösungsmittel ausgewählt ist aus ein oder mehreren Lösungsmitteln der Gruppe
(i) organische Carbonate, insbesondere Ethylencarbonat, Propylencarbonat, Dimethylcarbonat, Diethylcarbonat oder Ethylmethylcarbonat; und
(ii) Ether, insbesondere Diethoxyethan oder Dimethoxyethan.

22. Lithiumbatterie nach Anspruch 20, bei der das Leitsalz ausgewählt ist aus der Gruppe Lithiumperchlorat, Lithiumtetrafluoroborat, Lithiumhexafluoroarsenat und Lithium-bis-oxalatoborat.

23. Lithiumbatterie nach Anspruch 20, bei der das Leitsalz mit einer Konzentration von etwa 1 mol/l im Elektrolyten vorliegt.

24. Verwendung einer Lithiumbatterie nach einem der Ansprüche 17 bis 23 für medizinische Implantate.

25. Verwendung nach Anspruch 24 für Herzschrittmacher oder Defibrillatoren.

26. Pulvermischung zur Herstellung einer Elektrode für eine Lithiumbatterie, bestehend aus oder enthaltend:
| | |
|---|---|
| 2 - 10 Gewichtsteile | eines kohlenstoffhaltigen Leitfähigkeitsadditivs auf Basis eines anisotropen expandierten Graphits; |
| 0 - 5 Gewichtsteile | eines plättchenförmigen, kugelförmigen oder kartoffelförmigen Graphits; |
| 1 - 8 Gewichtsteile | eines Bindemittels; und |
| 77 - 97 Gewichtsteile | eines Aktivmaterials ausgewählt aus der Gruppe Metall, Übergangsmetalloxid und Übergangsmetallphosphat, wobei das Aktivmaterial in der Lage ist, Lithium-Ionen im Kristallgitter zu interkalieren. |
